# EUROPEAN PATENT APPLICATION

(11) **EP 2 472 058 A2**
(43) Date of publication of application: **04.07.2012**
(21) Application number: 11250945.0
(22) Date of filing: 28.12.2011
(51) Int. Cl.: F01D 5/00

(54) **Gas turbine engine component material addition process**

(30) Priority: 28.12.2010 US 201061427690 P
(71) Applicant: Rolls-Royce Corporation, Indianapolis, IN 46241 (US)
(72) Inventor: Shuck, Quinlan Yee, Indianapolis Indiana 46220 (US)
(74) Representative: Dauncey, Mark Peter

(57) **Abstract**

A material addition process is described that includes coupling a plate to a gas turbine engine component and adding material to the plate. In one embodiment the gas turbine engine component can be processed by removing a portion that is damaged, such as a portion that includes a crack. A material can be deposited on the plate and built up in layers to replace the removed portion. The material can be layered upon the plate such that its thickness through the layers is smaller than a reach of the layers in a direction of the layer. The plate can be removed in whole or in part after a material has been added. In one form the material can be added by direct laser deposition. In one embodiment a metal powder is fused using a laser. Excess buildup can be removed to reveal a net shape article.

## Description

### RELATED APPLICATIONS

The present application claims the benefit of United States Provisional Patent Application No. 61/427,690 filed December 28, 2010 which is incorporated herein by reference.

### TECHNICAL FIELD

The present invention generally relates to gas turbine engine components subject to material addition processes, and more particularly, but not exclusively, to sacrificial substrates used in material addition processes.

### BACKGROUND

Adding material to a gas turbine engine component remains an area of interest. Some existing systems have various shortcomings relative to certain applications. Accordingly, there remains a need for further contributions in this area of technology.

### SUMMARY

One embodiment of the present invention is a unique gas turbine engine component subject to a material addition process. Other embodiments include apparatuses, systems, devices, hardware, methods, and combinations for adding material to a gas turbine engine component. Further embodiments, forms, features, aspects, benefits, and advantages of the present application shall become apparent from the description and figures provided herewith.

### BRIEF DESCRIPTION OF THE FIGURES

Fig. 1 depicts one embodiment of a gas turbine engine.
Fig. 2 depicts an embodiment of a gas turbine engine component.
Figs. 3a and 3b depict an embodiment of a damage and removal from a component.
Fig. 4 depicts one embodiment of coupling a backer plate to a component.
Fig. 5 depicts one embodiment of a material addition to a component.
Fig. 6 depicts one embodiment of a final component after material addition.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

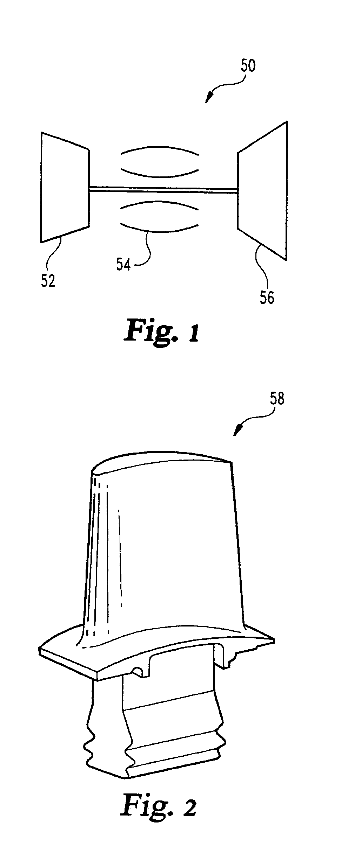

With reference to Fig. 1, a gas turbine engine 50 is depicted having a compressor 52, combustor 54, and turbine 56 and can be used to provide power to a vehicle such as, but not limited to, an aircraft. As used herein, the term "aircraft" includes, but is not limited to, helicopters, airplanes, unmanned space vehicles, fixed wing vehicles, variable wing vehicles, rotary wing vehicles, unmanned combat aerial vehicles, tailless aircraft, hover crafts, and other airborne and/or extraterrestrial (spacecraft) vehicles. Further, the present inventions are contemplated for utilization in other applications that may not be coupled with an aircraft such as, for example, industrial applications, power generation, pumping sets, naval propulsion, weapon systems, security systems, perimeter defense/security systems, and the like known to one of ordinary skill in the art.

The gas turbine engine 50 operates by receiving a working fluid and compressing it with the compressor 52. The working fluid can be air. Upon being compressed the working fluid is mixed with a fuel and combusted in the combustor 54 before being expanded through the turbine 56. The gas turbine engine can provide power through the turbine 56, it can provide propulsive thrust, or a combination of the two. Though the gas turbine engine 50 is depicted as a single spool engine, it will be appreciated that in other embodiments the gas turbine engine can have any number of spools. The gas turbine engine 50 can take the form of a turbojet, turbofan, turboprop, or turboshaft and can be a variable cycle and/or adaptive cycle engine. In short, the gas turbine engine 50 can take on many forms and be used for many purposes.

Turning now to Fig. 2, one form of a component 58 useful with the gas turbine engine 50 is shown The component 58 in the illustrative embodiment is in the form of a turbine blade, but in other embodiments the component 58 can take on a variety of other forms whether forming part of a flow path structure or another portion of the gas turbine engine 50. During some modes of operation, such as to produce power for a vehicle or while the component 58 is being manipulated for other purposes, damage to the component 58 may occur. Such damage can be the result of an impact with a foreign object, fatigue over multiple operations, and/or wear from repeated uses, among potential others. The component 58 can be processed and returned to service as will be described further below. Reference will be made below to the component 58 but it will be appreciated that the description is not limited to the embodiment of the component 58 depicted in Fig. 2.

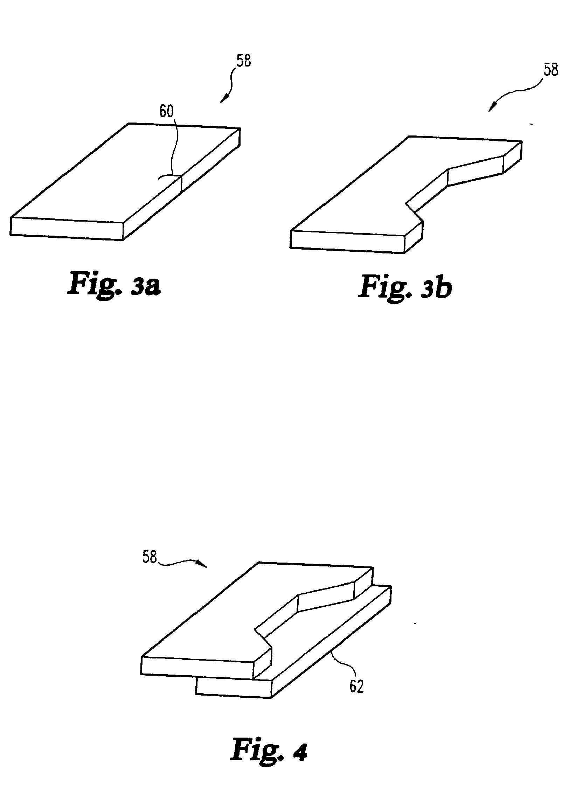

Turning now to Figs. 3a-6, one embodiment is shown of a component 58 during various portions of it being processed to receive an additional material in light of a damage to the component. In one form the component is damaged to the extent that it requires a material addition to place the component back into service. In another form the component dimensions may not match its original dimensions at the beginning of its service life because of a gradual wear over a number of operations. A material operation such as that described herein can be performed to the component to return it to, or near, its original outer dimensions.

Fig. 3a depicts a damage in the form of a crack 60 to the component 58. A first step in returning the component 58 to service is to remove the crack 60 from the component 58 by removing a portion of the component 58 surrounding the crack 60 to create a workpiece that can be seen in Fig. 3b. The portion removed can take a variety of shapes and sizes which may be dictated by the particular type of component, its expected service environment, and ease of repair, among other possible considerations. Thus, the shape and location of the material removed from the component 58 shown in Figs. 3a and 3b are for illustration purposes only. Furthermore, it will be appreciated that although the illustrated embodiment depicts removing a portion of the component 58 as a first step in returning it to service, not all components that are operated upon according to the present disclosure need to have a portion removed. The portion of the component 58 that is removed can be by way of physical removal process such as mechanical machining/grinding/cutting/etc., to set forth just a few non-limiting examples. In some forms the portion can be machined away using processes such as electrical discharge machining. In other non-limiting forms the portion could be chemically removed. In short, a variety of techniques, and combination of techniques, for removing the portion of the component are contemplated herein.

Fig. 4 illustrates a backer plate 62 that is coupled to the component 58 after the portion has been removed as discussed above. In one form the backer plate 62 is a weld backing plate, but many other forms are contemplated herein. The backer plate 62 is coupled to form a bottom so that material can be added in the space to replace the portion that had been removed. As used herein, relational terms such as bottom, top, side, right, left, etc., are used herein for ease of convenience relative to the depictions in the figures and do not necessarily indicate any particular orientation of the component 58 during the processes described in the present application or its installation in a gas turbine engine 50. The backer plate 62 can be affixed using any variety of techniques such as via mechanical fasteners and the like, chemical agents such as epoxy, and joining approaches such as brazing, among any number of potential others. The backer plate 62 can extend any distance into the component 58 as well as any distance away from the component 58. To set forth just one non-limiting example, the backer plate 62 can extend partially to a side of the component opposite the side having the portion removed just far enough to form a bottom for the receipt of a material. In another non-limiting form the backer plate 62 could extend fully to the opposing side of the component 58 if needed and/or desired.

The backer plate 62 can have a shape in the form of a mirror image of a desired final surface of the component 58. For example, after a material is added to the space above the backer plate 62 and the backer plate 62 subsequently removed, the shape of the material remaining attached to the gas turbine engine component 58 can have the net shape, or near net shape, of the desired surface contour. If, for example, the component is in the form of an airfoil shape and if a material is added to the trailing edge of the component after that particular portion had been removed, the shape of the trailing edge after the backer plate 62 is removed can follow the desired airfoil shape of the component 58.

The backer plate 62 can be made from any variety of materials and can have any variety of dimensions. To set forth just one non-limiting example, the backer plate 62 can be a polycrystalline backer plate 62. In some forms the backer plate 62 can be reused for multiple material addition operations. In other forms the backer plate 62 can be removed, either in whole or in part, from the component 58.

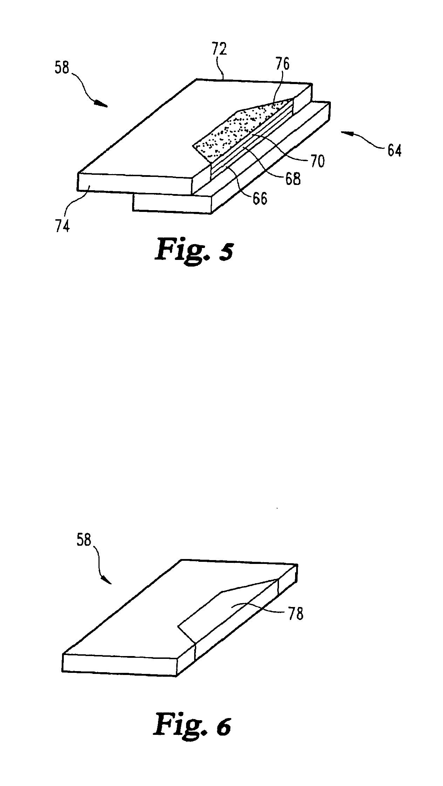

Turning now to Fig. 5, one embodiment of a layered material addition process is depicted. The component 58 is shown having a number of layers 64 of material added in the space formerly occupied by the portion removed from the component 58. The material added to the space can result in a net shape, or near net shape article. The embodiment depicted in Fig. 5 includes a bottom layer 66, middle layer 68, and upper layer 70. In other embodiments of the component 58, however, any number of material layers can be added upon the backer plate 62 whether greater in number or fewer than the number of layers depicted in Fig. 5.

The layers can be created using any variety of approaches. In one non-limiting form the layers can be laid down using solid free form fabrication techniques. One particular non-limiting approach described more fully below uses direct laser deposition to fuse a powder and create each of the layers of the material addition. In one form the powder can be metal. The powder feedstock can be directed to a general vicinity of a deposition and the laser can be scanned to fuse the powder and create a consolidated material. The process can include a full melting or partial melting of the powder. The powder can be delivered through a variety of techniques, one non-limiting example of which includes placing powder above the backing plate 62 by blowing the powder. As the laser is scanned the material forming the powder is fused in the general shape according to the scanned path of the laser. In one form the consolidated material is fused with a nearby fused material, or can be alternatively and/or additionally fused with a component that is being worked upon such as the component 58. Any number of suitable lasers can be used, and in one form the laser is a carbon dioxide laser. A desired component or material deposit is created when sequential layers of powder are scanned with the laser. Any number of layers can be used when adding material to the component 58.

The layers 66, 68, and 70 of the material addition can be created in a variety of manners. In one form the layers can be laid down using a scanned laser in a variety of build patterns. In one non-limiting example a layer can be laid down according to sequential paths of a scanned laser, the first of the paths adjoining a contour of the gas turbine component. The sequential paths of the scanned laser can all be in the same direction having a similar starting side and ending side. Although the immediate example includes multiple sequential build paths, not all layers need include multiple paths. Any variety of variations of scanning patters of the laser are contemplated herein to create any given layer of the material addition.

Each of the layers can be laid down using scanned paths that are different than the paths used in adjacent layers. For example, a layer closest to the backer plate 62 can be laid down having paths all aligned in the same general direction, while a layer above it is laid down having paths aligned in the opposite direction. Furthermore, any scanned path in one layer can have the same or opposite direction as an adjacent scanned path in an adjacent layer. Any variation in scanned paths are contemplated herein.

In one form of the present application the layers are laid down to a desired thickness to cover a desired area of the backer plate 62. In some forms the desired area may be the entire exposed area of the backer plate 62. After an initial layer covers the backer plate 62 in the desired area, another layer is created above it, again covering either the original desired area or another, different desired area for that thickness location. In this way a number of layers can be built up from the backer plate 62. The layers can have any variety of shapes, sizes, and thicknesses. In one non-limiting form the layers have the same thicknesses.

In one non-limiting form the layers are generally in the shape of a short and wide material addition. For example, the embodiment of Fig. 5 depicts layers 66, 68, and 70 having a through layer thickness that is smaller than the extent of the layers as they extend between portions 72 and 74 of the component 58. For example, the edge 76 of the material addition layers 64 extends a greater distance than the through-thickness of the layers 64. The resulting microstructure of a short and wide layered material addition can be more isotropic resulting in a tougher and more ductile material. A lateral reach of the layers 64 can be in any direction and not just the reach of the edge 76 discussed in Fig. 5. For example, and by ease of convenience only, the thickness of the layers 64 is smaller than either a width or length of the layers 64 wherein length is arbitrarily defined along the edge 76. As used herein, the terms "width" and "length" are used for ease of convenience according to the illustrated embodiment and may not be easily identifiable in other embodiments if the material addition does not have a shape that is generally quadrilateral as in the illustrated embodiment. It will be appreciated in Fig. 5 that the thickness of the stack is smaller than the reach of the stack in width or length. In some forms it could be described that the thickness is orthogonal to the other directions that the layers 64 extend. In other forms the stack may be curved or have a curvature and that the thickness is smaller than the distance that the stack reaches another direction, such as a general direction along the curve. Thus, the present application discloses a plurality of layers that are short and wide as opposed to tall and thin.

After one or more layers have been added or alternatively after all layers have been added, excess material from the backer plate 62 and/or from a deposit overbuild can be removed either in whole or in part from the component 58. Figs. 5 and 6 illustrate the removal of the backer plate 62 yielding a component 58 having the material addition 78. In some forms the entire backer plate 62 is removed from the component 58, but in other forms a portion of the backer plate 62 may remain integrated with the component 58 as it is returned to service. The excess material described above can be removed by way of a physical removal process such as mechanical machining/grinding/cutting/etc., to set forth just a few non-limiting examples. In some forms the excess material can be machined away using processes such as electrical discharge machining. In other non-limiting forms the excess material could be chemically removed. In short, a variety of techniques, and combination of techniques, for removing the portion of the component are contemplated herein.

One aspect of the present application provides a method comprising coupling a backing plate to a gas turbine engine component to create a material addition area having boundaries between the gas turbine engine component and a portion of the backing plate, conveying a metal powder to be located in the material addition area of the coupled gas turbine engine component and backing plate, and forming a plurality of repair layers throughout the material addition area by fusing the metal powder with an electromagnetic energy, wherein each of the repair layers of the plurality of repair layers is offset a different amount from the backing plate.

One feature of the present application further includes removing a portion of a gas turbine engine component to be repaired to reveal a through-cut and finishing the gas turbine engine component by eliminating excess material.

Another feature of the present application provides wherein the eliminating includes removing a portion of the backing plate, wherein a final repaired gas turbine engine component includes a remaining portion of the backing plate, and wherein a thickness of the plurality of repair layers is smaller than a lateral reach of the plurality of repair layers throughout the material addition area.

Yet another feature of the present application provides wherein the eliminating includes removing the backing plate, and wherein the plurality of repair layers is parallel with the backing plate.

Still another feature of the present application provides wherein gas turbine engine component is an airfoil member structured to be disposed in a flow path of a gas turbine engine.

Yet still another feature of the present application provides wherein the fusing includes fusing to the gas turbine engine component, and wherein the backing plate is a polycrystalline backing plate.

A further feature of the present application further includes removing a portion of a gas turbine engine component to be repaired to reveal a through-cut, wherein the electromagnetic energy is provided with a laser, and wherein the plurality of repair layers is transverse to the through-cut of the gas turbine engine component.

Another aspect of the present application provides a method comprising adding material to a gas turbine engine component, the adding including coupling a substrate to the gas turbine engine component such that the substrate extends beyond the gas turbine engine component, the substrate forming a base for a deposit of material to create an extended surface of the gas turbine engine component, energizing a metal feedstock above the substrate to create a fused metal coupled with the gas turbine engine component, as a result of the energizing, creating a first layer of metal parallel with the substrate, the first layer having a first thickness, and as a result of the energizing, creating a second layer of metal parallel with the first layer, the first layer disposed between the second layer and the substrate, the second layer having a second thickness.

One feature of the present application further includes finishing the gas turbine engine component after the forming to remove material outside of a net shape, and wherein a length of the first layer is larger than the first thickness and the length is a distance along a stack of first layer and second layer parallel with the substrate.

Another feature of the present application provides wherein the metal feedstock is a metal powder, and wherein as a result of the creating, forming a stack of layers having a stack thickness, the thickness smaller than a length of the stack as it extends to cover an area.

Yet another feature of the present application provides wherein the energizing includes lasing the metal feedstock with a laser.

Still another feature of the present application further includes removing a damaged portion of the gas turbine engine component, and wherein the forming is a repair process of a damaged gas turbine engine component.

Yet still another feature of the present application further includes removing the substrate.

A further feature of the present application provides wherein the removing includes removing a portion of the substrate and leaving another portion coupled to the gas turbine engine component.

Yet another aspect of the present application provides a method comprising coupling a gas turbine engine component with a sacrificial substrate, directing a feedstock material to a work area of the gas turbine engine component, fusing the feedstock material to the gas turbine engine component via an electromagnetic energy to create a layer of metal, forming a plurality of layers with the fusing, and removing a portion of the sacrificial substrate, a remaining portion of the sacrificial substrate forming part of a refurbished gas turbine engine component.

A feature of the present application further includes removing a portion of the gas turbine engine component prior to the forming, and wherein the plurality of layers are parallel with the sacrificial substrate.

Another feature of the present application provides wherein the electromagnetic energy is from a laser.

Yet another feature of the present application provides wherein the feedstock material is a powdered metal.

Still another feature of the present application provides wherein a thickness of the plurality of layers is smaller than a width of the plurality of layers.

Yet still another feature of the present application provides wherein the refurbished gas turbine engine component is a component repaired from a damage inflicted upon the component.

A further feature of the present application provides wherein the sacrificial substrate is a polycrystalline substrate.

While the invention has been illustrated and described in detail in the drawings and foregoing description, the same is to be considered as illustrative and not restrictive in character, it being understood that only the preferred embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as via," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A method comprising:
coupling a backing plate to a gas turbine engine component to create a material addition area having boundaries between the gas turbine engine component and a portion of the backing plate;
conveying a metal powder to be located in the material addition area of the coupled gas turbine engine component and backing plate; and
forming a plurality of repair layers throughout the material addition area by fusing the metal powder with an electromagnetic energy, wherein each of the repair layers of the plurality of repair layers is offset a different amount from the backing plate.

2. The method of claim 1, which further includes removing a portion of a gas turbine engine component to be repaired to reveal a through-cut and finishing the gas turbine engine component by eliminating excess material.

3. The method of claim 2, wherein the eliminating includes removing a portion of the backing plate, wherein a final repaired gas turbine engine component includes a remaining portion of the backing plate, and wherein a thickness of the plurality of repair layers is smaller than a lateral reach of the plurality of repair layers throughout the material addition area.

4. The method of claim 2, wherein the eliminating includes removing the backing plate, and wherein the plurality of repair layers is parallel with the backing plate.

5. The method of claim 1, wherein the fusing includes fusing to the gas turbine engine component, and wherein the backing plate is a polycrystalline backing plate.

6. The method of claim 1, which further includes removing a portion of a gas turbine engine component to be repaired to reveal a through-cut,
wherein the electromagnetic energy is provided with a laser, and wherein the plurality of repair layers is transverse to the through-cut of the gas turbine engine component.

7. A method comprising:
adding material to a gas turbine engine component, the adding including:
coupling a substrate to the gas turbine engine component such that the substrate extends beyond the gas turbine engine component, the substrate forming a base for a deposit of material to create an extended surface of the gas turbine engine component;
energizing a metal feedstock above the substrate to create a fused metal coupled with the gas turbine engine component;
as a result of the energizing, creating a first layer of metal parallel with the substrate, the first layer having a first thickness; and
as a result of the energizing, creating a second layer of metal parallel with the first layer, the first layer disposed between the second layer and the substrate, the second layer having a second thickness.

8. The method of claim 7, which further includes finishing the gas turbine engine component after the forming to remove material outside of a net shape, and wherein a length of the first layer is larger than the first thickness and the length is a distance along a stack of first layer and second layer parallel with the substrate.

9. The method of claim 7, wherein the metal feedstock is a metal powder, and wherein as a result of the creating, forming a stack of layers having a stack thickness, the thickness smaller than a length of the stack as it extends to cover an area; and
wherein the energizing includes lasing the metal feedstock with a laser.

10. The method of claim 7, which further includes removing a damaged portion of the gas turbine engine component, and wherein the forming is a repair process of a damaged gas turbine engine component; and
which further includes removing the substrate.

11. The method of claim 10, wherein the removing includes removing a portion of the substrate and leaving another portion coupled to the gas turbine engine component.

12. A method comprising:
coupling a gas turbine engine component with a sacrificial substrate;
directing a feedstock material to a work area of the gas turbine engine component;
fusing the feedstock material to the gas turbine engine component via an electromagnetic energy to create a layer of metal;
forming a plurality of layers with the fusing; and
removing a portion of the sacrificial substrate, a remaining portion of the sacrificial substrate forming part of a refurbished gas turbine engine component.

13. The method of claim 12, which further includes removing a portion of the gas turbine engine component prior to the forming, and wherein the plurality of layers are parallel with the sacrificial substrate.

14. The method of claim 13, wherein the electromagnetic energy is from a laser; and
wherein the feedstock material is a powdered metal.

15. The method of claim 12, wherein a thickness of the plurality of layers is smaller than a width of the plurality of layers.
